# EUROPEAN PATENT SPECIFICATION

(11) **EP 0 549 741 B1**
(45) Date of publication and mention of the grant of the patent: **08.05.1996**
(21) Application number: 92910785.2
(22) Date of filing: 27.05.1992
(51) Int. Cl.: B63B 1/40

(54) **WAVE MAKING ENERGY ABSORBER DURING VESSEL'S PROPULSION**
VERRINGERUNG DES WELLENWIDERSTANDES WAEHREND DES SCHIFFSVORTRIEBES
ABSORBEUR DE L'ENERGIE DE RENCONTRE LORS DE LA PROPULSION D'UN NAVIRE

(30) Priority: 10.06.1991 GR 91100260
(43) Date of publication of application: 07.07.1993
(73) Proprietor: Petromanolakis, Emmanuel E., GR-12 131 Peristeri Athens (GR)
(72) Inventor: Petromanolakis, Emmanuel E., GR-12 131 Peristeri Athens (GR)
(86) International application number: GR9200005
(87) International publication number: WO9222456

(56) References cited:
- DE-A- 3 224 390
- DE-C- 927 256
- FR-A- 1 017 897
- PATENT ABSTRACTS OF JAPAN vol. 8, no. 174 (M-316)10 August 1984 & JP-A-59 067 191 (HIROSHI OOKUMA) 16 April 1984

## Description

### TECHNICAL FIELD

The invention refers to the hydrodynamic field and it concerns, the installation of an external conduit called absorber, placed forward of the bow of a vessel, extending aft of the bow too, either as a single conductor or divided in two parts if necessary.

### THE PRIOR ART

The state of the art faces the propulsion problem of a vessel, in order to decrease partially the wave making energy losses, by installing a bolbous bow at forward end, or a conduit or conduits' system inside the vessel which starts from the bow and ends at the sides or at the aft end of a vessel. However this entails a significant increase of friction losses due to the large length of the conduit, and the decreasing displacement, due to the conduit's volume, in the case where the conduits run along the entire length of the vessel. Consequently the prorulsion power per cubic meter of displacement or transported volume (HP/cubic meter) is increased, that is we are going to have less transported capacity for the same power, which is equivalent to increased fuel oil and lubricants consumption for the same transported cargo capacity.

However, the bolbous bow also decreases the wave making resistance but the decrease attained thereby is comparatively less than the decrease attained by the proposed wave making energy absorber arrangement.

Consequently the state of the art practically is not so economical in comparison to the proposed invention. Into this invention, vessel's displacement is kept unchanged having a better hull efficiency, due to the decrease of propulsion resistance by installing a wave making energy absorber. The obtained efficiency being much larger than the efficiency obtained in the prior art, in the abovementioned manner, the present invention provides a substantial decrease of the wave making resistance.

### BRIEF DESCRIPTION OF THE DRAWINGS

The invention will be made clearly apparent to those skilled in the art by reference to the accompanying drawings, wherein are depicted illustrative views of the invention.

Figure 1 shows in accordance to a first embodiment of the invention a side view of the vessel at the bow of which is installed the proposed conduit-wave making energy absorber.

Figure 2 shows a plan view or section A-A of figure 1.

Figure 3 shows a front view or section B-B of figure 1.

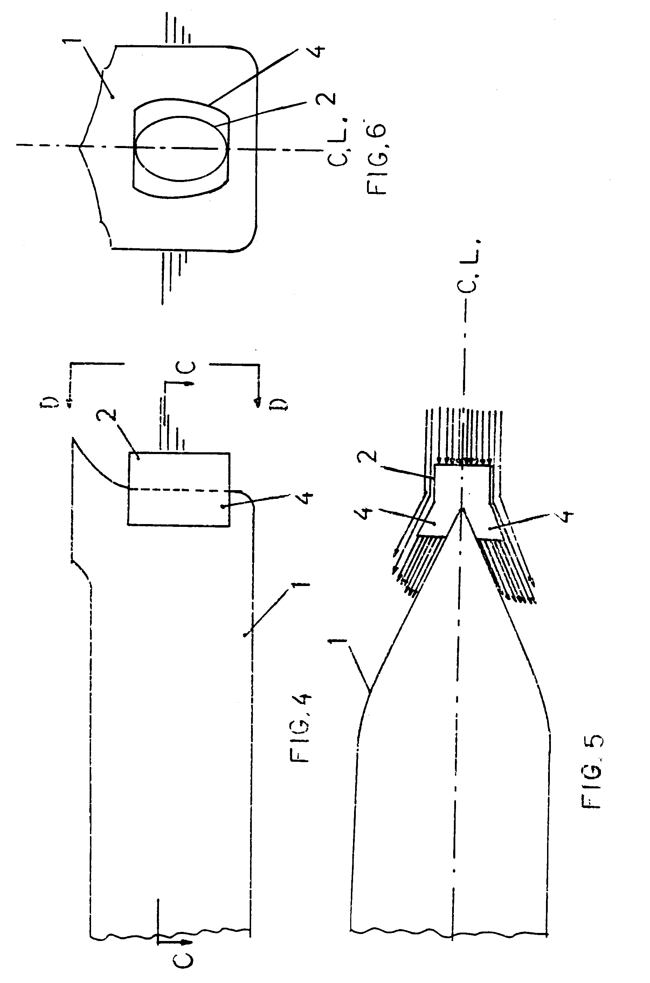

Figure 4 shows in accordance to an alternative embodiment of the invention a side view of the vessel, at the bow of which is installed the proposed conduit - wave making energy absorber divided at the bow to a pair of legs extending on either side of the vessel.

Figure 5 shows a plan view or section C-C of figure 4.

Figure 6 shows a front view or section D-D of figure 4.

The various points illustrated in the accompanying drawings are enlisted below in an order corresponding to their reference numerals in the accompanying drawings.
1. Vessel or hull.
2. External conduit-wave making energy absorber placed forward of the bow.
3. Supporting and reinforcing elements.
4. Legs of conductor 2 extending on either side of the bow.

### DETAILED DESCRIPTION OF THE INVENTION

Referring now to the attached drawings, the invention will be described in an illustrative manner. According to the first embodiment of the invention an external conduit is mounted forward of the bow on a vessel, extending below or below and above the water line of the vessel. This conduit - wave making energy absorber has a certain length in order to accomplish the aim of the invention, that is to extingnish or reduce the wave making energy losses. When the sea water enters through at least one or more inlet openings and is discharged through at least one or more outlet openings the vessel's wave making is reduced.

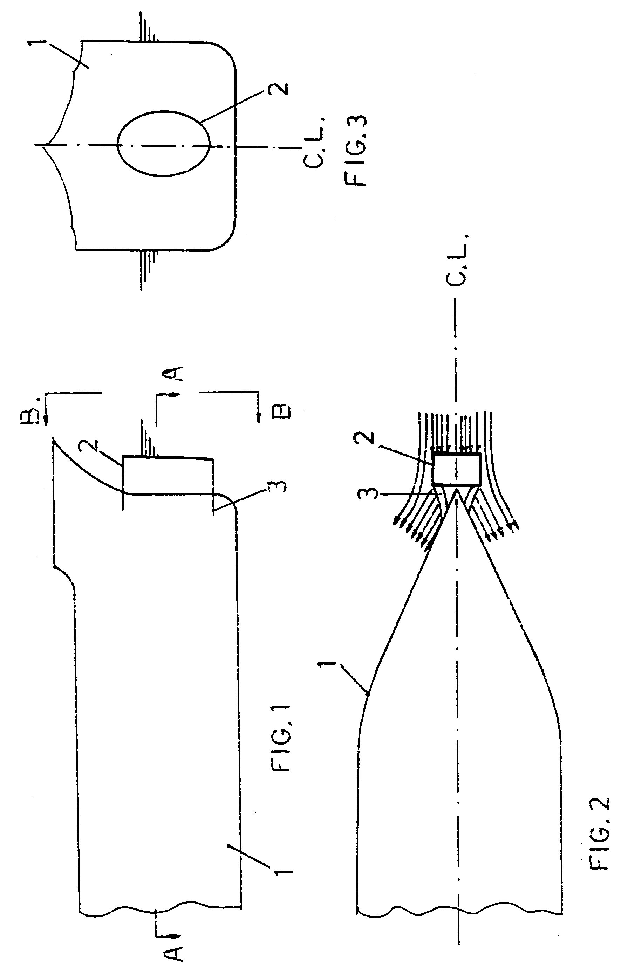

The manner in which the invention is implemented is presented in Figures 1-3, wherein are shown a side view, a section A-A and a section B-B. The side view also shows the height of this external conduit - wave making energy absorber 2, and the distance of the conduit from the external side of a vessel 1.

This conduit-wave making energy absorber extends in accordance to an alternative embodiment of the invention aft of the bow, being divided in at least two legs with one outlet opening on each of those legs.

In accordance to a further alternative embodiment of the invention, it is possible to ommit the conduit extending forward of the legs, so that sea water enters directly into at least one of the legs extending on either side of the vessel and is discharged through at least one outlet opening.

Therefore, the energy lost, due to the wave making during the propulsion of the vessel in sea water, is absorbed and thereby reduced. Consequently, less power is required for the same displacement of the vessel, and transportation of a cargo volume unit is thereby made cheaper.

Conductor supporting elements 3, support this external conduit 2 on the hull 1, the conduit itself and/or legs 4 extending on either side have hydrodynamic shape to obtain the best possible efficiency of this arrangement.

In this way, we are going to have a wave making decrease which being absorbed as abovementioned results in a more economic transportation, because due to the wave making decrease we shall have a decrease of the total resistance during vessel's propulsion, which is equivalent to the propulsion power corresponding decrease and finally a fine oil and lubricants decrease for the same displacement and speed.

The size and hydrodynamic shape (if required) of the conduit as well as the hydrodynamic shape of the supporting elements, the distance from the center line of this external conduit-wave making absorber depends on vessel's size, design or cruise speed and displacement.

It must hereby be noted that either the single conduit 2 or the conduit 2 divided into two legs 4 or even simply the two legs 4, right from the inlet opening to the outlet opening or openings, may have any desired linear or curved shape and may either be of a circumferentially compact structure or it may include partial openings, e.g. in its vertically defined upper and/or lower sides. Openings and/or slots and/or grooves of a desired number, form and arrangement, by means of which a balancing of pressures is obtained, may also be provided at the flow region between the inlet opening or openings up to the outlet opening or openings.

It must also be noted that, in accordance to an illustrative embodiment of the invention, a portion of either wave making energy absorber 2 mounted forward of the bow and/or the abovementioned bow's aft extending legs 4 may be incorporated into the hull, thereby suitably modifying bow's geometry, whilst it is also possible that the conduit or legs are mounted on the hull in combination to the existing technology of bow's bulb.

All the abovementioned facts are naturally valid both with vertical bow vessels as well as vessels with a bow inclined at any desired inclination. It is understandable too that, the proposed arrangement, concerning the advantageous mounting of the wave making energy absorber, is equallly valid with vessel the vessel being either fully or partially loaded and independently of the ballast condition.

The invention can be implemented at any desirable form design or size.

The figures (drawings), being attached to the present description, do not constitute a confining form of the invention, but simply an illustrative one.

The construction of the invention is being realised by profile iron and steel plates or other desired properly shaped materials.

Their dimensions depend proportionally on the ship's dimensions and design or cruise speed, being desired.

By the term "conduit" is meant not only the one of a circular section but that of any section transversally and longitudinally, the section being either constant or convergent or divergent section or a combination of two or more sections.

The proposed inventions effects an absorbing of the energy losses dine to wave-making.

By the term "supports" are meant steel constructed or other material pieces, which are being used as supports of the said bow's -external or partialy incorporated in the hull - conduit, these supports being hydrodynamically shaped or not.

## Claims

1. Ship with a wave making energy absorber (2) during vessel's propulsion, mounted on the bow (1) and comprising an conduit external to the ship (2,4), which includes at least one inlet opening forward of the bow and at least one outlet opening, a passage being defined for the flow of sea water in between said inlet and said outlet opening, said conduit extending below or onto or below and above the water line level, where the sea water entering through said at least one inlet opening and exiting through said at least one outlet opening effects a reduction of the wave making losses.

2. Ship with a wave making energy absorber during vessel's propulsion, in accordance to above claim 1, said conduit (2,4) extending aft of the bow line, being divided to at least two legs (4), each side leg having at least one inlet and at least one outlet opening for the sea water flow.

3. Ship with a wave making energy absorber during vessel's propulsion, in accordance to any of the above claims 1,2, wherein said conduit and/or said aft of the bow line at least two legs (4) have a constant or divergent or convergent section or the combination of two or more sections in parts.

4. Ship with a wave making energy absorber during vessel's propulsion, in accordance to any of the above claims 2-3, comprising aft of the bow line at least two longitudinally extending said legs (4), where each of said legs includes at least one outlet opening of the sea water flow, said sea water flow being directly introduced into said at least two legs (4), extending on either side of the bow.

5. Ship with a wave making energy absorber during vessel's propulsion, in accordance to any of the above claims 1-4, where the entire length or a portion of length of said conduit extending from said at least one inlet opening to to said at least one outlet opening and/or of said directly aft of the bow line extending at least two legs (4) have a hydrodynamic shape in the longitudinal direction along a portion or the entire of their perimeter.

6. Ship with a wave making energy absorber during vessel's propulsion, in accordance to any of the above claims 1-5, wherein said passage defined for the flow of sea water between said at least one inlet and said at least one outlet opening comprises openings and/or slots and/or guide ribs of the desired number, form and arrangement, said openings and/or slots and/or guide ribs effecting a balancing of pressures.

7. Ship with a wave making energy absorber during vessel's propulsion, in accordance to any of the above claims 1-6, wherein a portion of said bow fwd mounted conduit and/or said aft of bow extending legs is incorporated into the vessel, thereby suitably shaping bow's geometry.

8. Ship with a wave making energy absorber during vessel's propulsion, in accordance to any of the above claims 1-7, said absorber being mounted on a vessel in combination to the existing technology of bolbus bow.

9. Ship with a wave making energy absorber during vessel's propulsion, in accordance to any of the above claims 1-8, said passage for the flow of sea water between said at least one inlet opening up to at least one said outlet opening of said either single conduit or conduit with said legs (4) extending on either side thereof has any linear or curved shape and is of a perimetrically compact structure throughout its length.

10. Ship with a wave making energy absorber during vessel's propulsion, in accordance to any of the above claims 1-9, said passage for the flow of sea water between said at least one inlet opening up to at least one said outlet opening of said either single conduit or conduit with said legs (4) extending on either side thereof has any linear or curved shape, and is entirely or partially opened on either of its vertically defined upper and/or lower sides.

11. Ship with a wave making energy absorber, during vessel's propulsion, in accordance to any of the above claims 1-10, wherein the vessel's bow line upon which said wave making energy absorber is mounted may be parallel to or in any desired inclination to the natural vertical line, the vessel being considered at sea calm condition.

12. Ship with a wave making energy absorber, during vessel's propulsion, in accordance to any of the above claims 1-11, wherein if necessary said conduit is mounted onto the vessel by means of supporting elements (3) with or without a hydrodynamic shape in the water flow direction.

## Patentansprüche

1. Ein Schiff mit einem wellenmachendem Energiesauger(2) beim Fortstossen des Schiffes. Der Energiesauger ist an dem Bug (1) angeordnet (1) und besteht aus einer Wasserleitung der ausser des Schiffes liegt (1, 4). Die Wasserleitung beinhaltet, wenigstens, einen Aussflusen - und einen Einflussenmund. Dabei wird eine Passage, für den Fluss von Seewasser, zwissen dem sogenannten, Einflussen - und dem sogenannten Ausflussenmund, gebildet, der sogenannte Wasseleitung, die sich unten, oder darauf, oder unten und über das Niveau, der Wasserlinie streckt, wo das Seewasser, das wenigstens durch einen Einflussmund hineinfliesst und durch wenigstens, einen Ausflussmund herausfliesst, eine Verminderung, der verluste, die durch die Wellen gemacht werden, veranlasst.

2. Ein Schiff, mit einem wellenmachenden Energiesauger, beim Fortstossen des Schiffes, dem obigen Anspruch 1 nach, und der sogenannten, Wasserleitung (2, 4) die sich zur Buglinie streckt. Die Wasserleitung, ist geteilt mindestens in zwei Füsse (4) die auf jeder Seite wenigstens einen Einflussen und einen Ausflussenmund, für die Fluss des Seewassers haben.

3. Ein Schiff, mit einem wellenmachendem Energiesauger, beim Fortstossen des Schiffes beiden obigen Ansprüchen, 1 und 2 nach, wo die sogenannte Wasserleitung, und/oder, die sogenannte, Linie, zur Bug, wenigstens zwei Füsse, haben einen festen, oder geneigten,oder sich nähernden Bereich, oder die kombination, von zwei oder mehr Bereichen in Teilen.

4. Ein Schiff, mit einem wellenmachendem Energiesauger, beim Fortstossen des Schiffes, beiden den obigen Ansprüchen, 2-3 nach, beeinhaltet mindestens, zwei sich länglich streckende sogenannte Füsse (4) wo, jeder, von den sogenannte Füssen, wenigstens, einen Ausflussenmund, für den Fluss, des Seewassers enthaltet. Der Fluss des Seewassers, ist direkt wenigstens in zwei Füsse eingeführt die sich, auf jede Seite strecken.

5. Ein Schiff, mit einem wellenmachendem Energiesauger, beim Fortstossen des Schiffes, jeden von den obigen Ansprüchen 1-4 nach, wo die gesamte Länge, oder einer Anteil der Länge, von der sogenannte Wasserleitung, die wenigstens sich, von dem sogenannten, einen Ausflussenmund und direkt, zur Buglinie um wenigstens zwei Füsse streckt, hat eine hydrodynamische Form, in der longitudinalen Direktion, der Länge nach einer Portion oder, der gesamten Perimeter.

6. Ein Schiff, mit einem wellenmachendem Energiesauger, beim Fortstossen des Schiffes, jeden den von obigen Ansprüchen 1-5 nach, wo die sogenannte Passage, die bestimmt für den Fluss, des Seewassers, zwischen wenigstens, einem sogenannten Einfluss und einem sogenannten Ausflussmund, ist beeinhaltet Münde, und/oder Löcher und/oder Kannelierungen, die charakteristisch, für Spaltugen die bestimmten Nummer sind und als Resultat haben das Gleichgewicht der Drücke.

7. Ein Schiff, mit einem wellenmachendem Energiesauger, beim Fortstossen des Schiffes, jeder von den obigen Ansprüchen 1-6 nach, wo eine Portion, von den sogenannten Bug/angeordneter Wasserleitung, und/oder den Füssen, die sich, zum Bug strecken, integrated im Schiff ist, es gibt, also, eine geeignete Form, des Buges.

8. Ein Schiff, mit einem wellenmachendem Energiesauger, beim Fortstossen des Schiffes, jeden von den obigen Ansprüchen 1-7 nach. Der sogenannte Sauger ist angeordnet, auf einen Schiff, in Zusammenhang mit der bestehenden Technologie, des Bolbus Bug.

9. Ein Schiff, mit einem wellenmachendem Energiesauger, beim Fortstossen des Schiffes jeden von den obigen Ansprüchen 1-8 nach, hat eine Passage, für den Fluss des Seewassers, zwischen, wenigstens, einem sogenannten Einflussenmund, und mindestens einem sogenannten, Ausflussenmund, entweder, einer einzigen Wasserleitung, oder einer Wasserleitung, mit sogenannten Füssen (4), die sich auf jeden Seite, strecken. So hat die Passage jede linienförmige oder gebogene Form, und hat eine perimetrisch kompakte Beschaffen Weit in all ihrer Länge.

10. Ein Schiff mit einem wellenmachendem Energiesauger, beim Fortstossen des Schiffes, jeden von den obigen Ansprüchen 1-9 nach, hat eine Passage, für den Fluss des Seewassers, zwischen, wenigstens einem, sogenannten Einflussenmund und mindestens einem sogenannten Ausflussenmund, entweder einer einzigen Wasserleitung, oder einer Wasserleitung, mit sogenannten Füssen (4), die sich, auf jeden Seite, strecken. So, hat die Passage jede linienförmige, oder gebogene Form, und ist insgesamt, oder teilweise geöffnet auf jede, von ihren in vertikaler Richtung bestimmten oberen und oder unteren Seiten.

11. Ein Schiff, mit einem wellenmachendem Energiesauger, beim Fortstossen des Schiffes, jeden von den obigen Ansprüchen 1-10 nach, wo die Buglinie des Schiffes, worauf der sogenannte wellenmachende Energiesauger, angeordnet ist, parallel, zur oder im jeder gewollten Senkung, in Bezug auf die natürliche vertikale Linie sein können. Dabei, ist betrachtet, dass der Schiff, in ruhigen See ist.

12. Ein Schiff mit einem wellenmachendem Energiesauger, beim Fortstossen des Schiffes, jedem von den obigen Ansprüchen 1-11 nach, wo, ob es notwendig ist, die sogenannte Wasserleitung, auf den Schiff durch Mittel von unterstützenden Elementen (3).

## Revendications

1. Bateau avec un moyen qui absorbe l'énergie de l'ondulation pendant la propulsion de celui-ci, installé sur la proue (1) et comportant un conduit extérieur au bateau (2,4), qui comprend au moins un orifice d'entrée et au moins un orifice de sortie devant la proue, un conduit défini concernant l'écoulement de l'eau de la mer entre l'orifice dit d'entrée et l'orifice dit de sortie, le conduit dit étendu au-dessous ou sur ou au dessous et au-dessus du niveau d'eau, où l'eau de la mer entrant à travers au moins un orifice d'entrée et sortant à travers au moins un orifice de sortie a comme résultat une réduction des pertes de l'ondulation.

2. Bateau avec un moyen qui absorbe l'énergie de l'ondulation pendant la propulsion de celui-ci, selon la revendication 1, le conduit dit (2,4) étendu ensuite la ligne de la proue, ramifié au moins en deux parties (4), chaque partie comprend au moins un orifice d'entrée et au moins un orifice de sortie de l'eau de la mer devant la proue.

3. Bateau avec un moyen qui absorbe l'énergie de l'ondulation pendant la propulsion de celui-ci, selon la revendication 1 ou 2, où le conduit dit et/ou au moins les deux parties dites qui étenduent ensuite la ligne de la proue ont une coupe constante ou divergente ou convergente ou la combination de celles-ci ou de deux ou plusieures de celles-ci en portions.

4. Bateau avec un moyen qui absorbe l'énergie de l'ondulation pendant la propulsion de celui-ci, selon les revendications 2-3, qui comprend ensuite la ligne de la proue au moins les deux parties dites étendues au long, où toutes les parties dites comprennent au moins un orifice de sortie de l'eau de la mer, où l'eau de la mer est introduit directement dans au moins deux parties dites (4), étendues tous les deux à chaque côté de la proue.

5. Bateau avec un moyen qui absorbe l'énergie de l'ondulation pendant la propulsion de celui-ci, selon les revendications 1-4, où la longueur tout entière ou une partie de la longueur du conducteur dit étendu au moins d'un orifice d'entrée à au moins un orifice de sortie et/ou des deux parties dites étendues directement ensuite de la ligne de la proue ont une forme hydrodynamique à la direction longitudinale au long d'une portion ou de leur entière pétimètre.

6. Bateau avec un moyen qui absorbe l'énergie de l'ondulation pendant la propulsion de celui-ci, selon les revendications 1-5, où le passage dit pour l'écoulement de l'eau de la mer en travers au moins de l'orifice d'entrée et au moins de l'orifice de sortie dites, comprend des ouvertures et/ou des coches et/ou des guide rayures du nombre, de la forme et de l'arrangement désirables, étant comme résultat un balance des pressions.

7. Bateau avec un moyen qui absorbe l'énergie de l'ondulation pendant la propulsion de celui-ci, selon les revendications 1-6, où une portion du conducteur dit qui s'installe devant la poupe et/ou de deux parties dites qui sont étendues ensuite de la ligne de la proue sont incorporés au bateau, et par ce moyen convenablement formant la géométrie de la proue.

8. Bateau avec un moyen qui absorbe l'énergie de l'ondulation pendant la propulsion de celui-ci, selon les revendications 1-7, où le moyen qui absorbe l'énergie de l'ondulation est placé sur le bateau en combination avec la technologie existante de la bulbe de la proue.

9. Bateau avec un moyen qui absorbe l'énergie de l'ondulation pendant la propulsion de celui-ci, selon les revendications 1-8, où le passage, défini pour l'écoulement de l'eau de la mer en travers au moins d'un orifice d'entrée jusqu'au moins un orifice de sortie dites du conducteur unique dit ou du conducteur avec les deux parties dites étendues à chaque côté du bateau, a une forme linéaire ou courbée et il est fermé en pétimètre entière.

10. Bateau avec un moyen qui absorbe l'énergie de l'ondulation pendant la propulsion de celui-ci, selon les revendications 1-9, où le passage, défini pour l'écoulement de l'eau de la mer en travers au moins d'un orifice d'entrée jusqu'au moins un orifice de sortie dites du conducteur unique dit ou du conducteur avec les deux parties étendues à chaque côté du bateau, a une forme linéaire ou courbée et il est entièrement ou en partie ouvert à ses côtés verticales.

11. Bateau avec un moyen qui absorbe l'énergie de l'ondulation pendant la propulsion de celui-ci, selon les revendications 1-10, où la ligne de la proue dite du bateau au-dessus duquel s'adapte le moyen qui absorbe l'énergie de l'ondulation dit peut être parallèl ou incliné en toute inclination désirable rélativement à la verticale naturelle, quand la mer est calme.

12. Bateau avec un moyen qui absorbe l'énergie de l'ondulation pendant la propulsion de celui-ci, selon les revendications 1-11, où si nécessaire le conducteur dit est placé sur le bateau avec des éléments de soutien (3) avec ou sans une forme hydrodynamique vers la direction de l'écoulement de l'eau de la mer.
